# EUROPÄISCHE PATENTSCHRIFT

(11) **EP 3 498 994 B1**
(45) Veröffentlichungstag und Bekanntmachung des Hinweises auf die Patenterteilung: **18.03.2020**
(21) Anmeldenummer: 18000942.5
(22) Anmeldetag: 06.12.2018
(51) Int. Cl.: F01N 3/20, H05B 3/82

(54) **HEIZEINRICHTUNG ZUM BEHEIZEN VON FLÜSSIGKEITEN IN EINEM RESERVOIR, WIE EINEM TANK ODER EINEM BEHÄLTER, EINES FAHRZEUGS**
HEATING DEVICE FOR HEATING OF LIQUIDS IN A RESERVOIR, SUCH AS A TANK OR A CONTAINER OF A VEHICLE
DISPOSITIF DE CHAUFFAGE PERMETTANT DE CHAUFFER DES LIQUIDES DANS UN RÉSERVOIR, TEL QU'UN CONTENEUR-CITERNE OU UN RÉCIPIENT, D'UN VÉHICULE

(30) Priorität: 18.12.2017 DE 202017006480 U
(43) Veröffentlichungstag der Anmeldung: 19.06.2019
(73) Patentinhaber: I.G. Bauerhin GmbH, 63584 Gründau (DE)
(72) Erfinder: Winterstein, Thomas, D-63743 Aschaffenburg (DE); Flittner, Klaus, D-63867 Johannesberg (DE)
(74) Vertreter: Grimm, Ekkehard

(56) Entgegenhaltungen:
- DE-A1-102004 013 535
- DE-A1-102007 005 771
- DE-A1-102015 003 098

## Beschreibung

Die vorliegende Erfindung betrifft eine Heizeinrichtung gemäß dem Oberbegriff des Anspruchs 1.

Solche Heizeinrichtungen werden zum Beheizen von Flüssigkeiten in einem Reservoir, insbesondere eines Fahrzeugs, wie einem Treibstofftank oder einem Wasserbehälter für Kühlwasser oder Scheibenwischwasser, eingesetzt, um bei tiefen Temperaturen einem Einfrieren des Wassers oder einer Änderung der Konsistenz der Flüssigkeit, zum Beispiel des Dieselkraftstoffs, entgegenzuwirken.

Ein besonderes Anwendungsgebiet ist die Beheizung von Harnstofftanks, in denen Harnstoff bevorratet ist, um diesen dem Dieselkraftstoff beizumischen, um so die Dieselabgasnormen zu erfüllen. Die hierbei verwendete Harnstofflösung wird auch als AdBlue^{R} (Marke des Deutschen Verbands der Automobilindustrie e.V.) bezeichnet. Ein solcher Zusatz wird in Nordamerika entsprechend als DEF (Diesel Exhaust Fluid) bezeichnet.

Das Verfahren beruht darauf, dass Ammoniak in den in Fahrzeugen eingesetzten Katalysatoren eingespritzt wird, das die Stickoxide reduziert. Da jedoch Ammoniak nicht nur einen beißenden Geruch hervorruft, sondern auch gefährlich ist, wird Harnstoff verwendet, der sich zu Ammoniak zersetzt. Das eingesetzte AdBlue ist eine wässrige Lösung mit 32,5% Harnstoffanteil und wandelt das im Abgas enthaltene, umweltschädliche Stickoxid selektiv zu Wasser und Stickstoff um, ohne dass unerwünschte Nebenprodukte entstehen. Der Verbrauch dieses Zusatzes liegt im Bereich von 2% bis 8% des Treibstoffverbrauchs, so dass relativ große Behälter für den Harnstoff erforderlich sind. Dieser Vorgang wird als SCR-Verfahren (Selective Catalytic Reduction) bezeichnet.

Da die wässrige Harnstofflösung bei -11° Celsius (12° Fahrenheit) gefriert, werden beheizbare Tanks gefordert.

Eine Harnstofflösung zeigt eine stark korrosive Eigenschaft, weshalb die üblichen Heizeinrichtungen, die hierzu in die Tanks oder Behälter eingebaut werden, ein gegenüber der zu beheizenden Flüssigkeit beständiges Gehäuse mit einer rohrförmigen Außenhülle, die einen rechteckigen, einen runden oder auch ovalen Querschnitt aufweisen kann. Diese Außenhülle ist an dem einen Ende durch ein Bodenteil und an dem anderen Ende durch ein Deckelteil verschlossen. In diese Außenhülle ist ein Einsatz mit einem Heizelement eingefügt. Für das Heizelement sind Anschlussleiter abgedichtet aus dem Gehäuse herausgeführt.

Die DE 10 2016 111 258 A1 beschreibt eine Heizpatrone mit einem äußeren Schutzrohr 2 und einem inneren Hüllrohr 7. In einen Zwischenraum zwischen Schutzrohr 2 und Hüllrohr 7 ist ein Federelement eingesetzt, das im Querschnitt der Heizpatrone gesehen wellen- oder mäanderförmig ausgeführt ist. Innerhalb des inneren Hüllrohrs befindet sich mit Abstand dazu ein keramisches PTC-Element 9 (Bezugszeichen hier derzeit nur zur Orientierung - werden dann gestrichen).

Die DE 102 58 257 A1 betrifft eine elektrische Heizeinrichtung zum Beheizen einer Flüssigkeit in einem Kraftfahrzeug mit einem metallischen Gehäuse, das in die Flüssigkeit eintaucht, innerhalb dem sich ein Heizeinsatz befindet, der ein Heizelement oder mehrere Heizelemente, die in dem metallischen Gehäuse eingeklemmt sind, aufweist. Bei den Heizelementen handelt es sich um platten- oder scheibenförmige, flache Teile, die an einem Rahmen gehalten sind.

Die DE 10 2005 025 724 A1 betrifft ein Harnstoffversorgungssystem für einen Abgasreinigungskatalysator und einen dafür geeigneten Heizeinsatz. Eine Verbindungsleitung, die den Harnstofftank mit einem Abgasreinigungskatalysator verbindet, ist an einem Auftaubehälter angeschlossen, in dem ein für die Inbetriebnahme des Katalysators ausreichender Bruchteil der in dem Harnstofftank speicherbaren Harnstoffmenge mittels des Heizeinsatzes aufgetaut wird. Der Heizeinsatz besteht aus einem korrosionsbeständigen Rohr, einem Metallgehäuse, das an dem Rohr befestigt ist, und mindestens einem Heizelement, das in dem Metallgehäuse angeordnet ist. Das Heizelement, das plattenförmig ausgeführt sein kann, kann in dem Metallgehäuse durch einen Montagerahmen gehalten werden.

Die DE 38 15 306 A1 beschreibt ein Heizelement, das aus einer Kontakteinheit mit mindestens einem PTC-Element, auf diesem beidseitig aufliegenden Kontaktplatten und einem Gehäuse besteht, die miteinander verpresst sind. In einem unverpressten Zustand des Heizelements sind die Kontaktplatten gekrümmt und liegen mit ihrer konvexen Seite auf den PTC-Elementen auf. Das Gehäuse besteht aus einem formstabilen Leichtmetall und besitzt in unverpresstem Zustand eine der Kontaktanordnung konvex zugewandte Innenwandung mit einem endlichen Krümmungsradius, der größer ist als der Krümmungsradius der Kontaktplatten. Nach einer Verpressung von Gehäuse und gekrümmten Kontaktplatten stehen die Kontaktplatten unter elastischer Spannung. Nach der Verpressung sind die gekrümmten Kontaktplatten und die Innenwandung des Gehäuses flach ausgerichtet und stehen unter Spannung. Als weiteren Stand der Technik sind DE102015003098 A1, DE102004013535 A1 und DE102007005771 A1 anzuführen.

Der vorliegenden Erfindung liegt die Aufgabe zugrunde, eine Heizeinrichtung mit den eingangs angegebenen Merkmalen zu schaffen, die einen einfachen Aufbau besitzt, eine Anpassung an die jeweiligen Behälter ermöglicht und eine hohe Effizienz zeigt. Gelöst wird diese Aufgabe durch eine Heizeinrichtung zum Beheizen von Flüssigkeiten in einem Reservoir mit den Merkmalen des Anspruchs 1. Vorteilhafte Ausgestaltungen dieser Heizeinrichtung sind in den abhängigen Ansprüchen angegeben.

Die erfindungsgemäße Heizeinrichtung ist dadurch gekennzeichnet, dass das mindestens eine Flächenheizelement die Innenfläche der Außenhülle, in Umfangsrichtung der Außenhülle gesehen, zumindest über einen Teilumfang, mit der Außenhülle in Wärmekontakt stehend und vorzugsweise daran flächig anliegend, abdeckt. Der Einsatz, oder zumindest Teile davon, steht unter Vorspannung und drückt dadurch das mindestens eine Flächenheizelement an die Innenfläche der Außenhülle zumindest in Teilbereichen, und vorzugsweise flächig, an.

Mit einer solchen Anordnung wird, obwohl sie einfach aufgebaut ist, eine gute Wärmeübertragung von dem Flächenheizelement auf die rohrförmige Außenhülle erzielt. Wesentlich hierbei ist, dass das Flächenheizelement durch den Einsatz im Wesentlichen flächig angedrückt wird, so dass vorzugsweise in wesentlichen Bereichen ein Formschluss und/oder ein Kraftschluss zwischen der Andrückfläche des Einsatzes, dem Flächenheizelement und der Innenfläche der Außenhülle erreicht wird.

Diese Heizeinrichtung, oder auch mehrere dieser Heizeinrichtungen, kann bzw. können zu größeren Heizeinheiten erweitert oder zusammengestellt werden, indem mehrere dieser Heizeinrichtungen nebeneinander liegend gebündelt werden oder indem mehrere dieser Heizeinrichtungen hintereinander positioniert und zusammengefasst werden.

Das Flächenheizelement ist vorzugsweise entlang eines Schlitzes des Einsatzes gehalten, der in Achsrichtung, bezogen auf die Achse der rohrförmigen Außenhülle, verläuft. Das auf diese Weise an seinem einen Ende gehaltene Heizelement wickelt sich, ausgehend von dem Schlitz, auf einer Außenfläche des Einsatzes, in Umfangsrichtung gesehen, ab.

Hierbei wird das Flächenheizelement bevorzugt entlang des Schlitzes durch mindestens ein Klemmteil befestigt, ohne dass zusätzliche Befestigungsmittel erforderlich sind. Ein solches Klemmteil kann als ein Schnappverschluss mit ineinandergreifenden Teilen aufgebaut werden, die, wenn sie einmal verriegelt sind, das Flächenheizelement dauerhaft an dem Einsatz halten.

Die Anschlussleiter des Flächenheizelements werden vorzugsweise im Bereich des Schlitzes, in dem das Flächenheizelement gehalten ist, in einen inneren Bereich des Einsatzes geführt. Hierzu kann auch das Klemmteil, oder auch die mehreren Klemmteile, die verwendet werden, um das Flächenheizelement an dem Einsatz zu halten, eingesetzt werden, um die Anschlussleiter daran zu halten. Diese Klemmteile können gleichzeitig als Zugentlastung für die Anschlussleiter und dadurch für die Verbindungsstelle zwischen Anschlussleiter und Heizelement dienen. Hierfür wird an dem mindestens einen Klemmteil eine Öffnung als Durchführung für die Anschlussleiter in den inneren Bereich des Einsatzes vorgesehen.

Vorzugsweise weist das Flächenheizelement mindestens eine laschenförmige Verlängerung auf, mittels der das Flächenheizelement an dem Einsatz im Bereich des Schlitzes gehalten ist. Diese laschenförmige Verlängerung kann gleichzeitig für eine Verbindung mit den Anschlussleitern dienen, so dass die Anschlussleiter über die laschenförmige Verlängerung(en) in den inneren Bereich des Einsatzes geführt sind.

Weiterhin können die Anschlussleiter an der laschenförmigen Verlängerung durch eine Vergussmasse abgedeckt werden.

Um eine möglichst große Wärmeübertragung von dem Flächenheizelement auf die Innenfläche der Außenhülle zu erhalten, sollte das mindestens eine Flächenheizelement in Umfangsrichtung der Außenhülle gesehen eine solche Länge aufweisen, dass die Innenfläche der Außenhülle vollständig abgedeckt ist, allerdings keine überlappenden Flächen des Flächenheizelements entstehen. Auf diese Weise wird durch das mindestens eine Flächenheizelement der gesamte Umfang der Innenfläche der Außenhülle abgedeckt.

Der Einsatz, an dem das Flächenheizelement gehalten ist, besitzt in einer besonders bevorzugten Ausführungsform einen geschlitzten Rohrkörper, der in radialer Richtung seinen Durchmesser erweiternd vorgespannt ist. Ein solcher geschlitzter Rohrkörper kann auch als Abschnitt einer Spiralfeder bezeichnet werden, an dessen Außenseite das mindestens eine Flächenheizelement anliegt. Durch diesen unter Vorspannung stehenden Spiralfeder-Abschnitt wird das mindestens eine Flächenheizelement gegen die Innenfläche der Außenhülle flächig angedrückt. Der Spiralfeder-Abschnitt kann mit seinem einen Ende im Bereich des Schlitzes an einem Innenteil des Einsatzes gehalten sein, während das andere Ende in Umfangsrichtung frei beweglich ist. Dies bedeutet, dass der Spiralfeder-Abschnitt, d.h. die in radialer Richtung gesehen äußere Fläche des Einsatzes, nur an einem Ende eingespannt ist.

In dieser Ausführungsform, bei der der Einsatz einen geschlitzten Rohrkörper, wie vorstehend beschrieben, besitzt, ist vorzugsweise mindestens die eine Längskante des Rohrköpers entlang des Schlitzes radial nach innen eingerollt oder umgestülpt, wobei dann das Flächenheizelement beispielsweise an der eingerollten Längskante befestigt werden kann und sich um die eingerollte Längskante herum auf die Außenseite des Rohrkörpers abwickelt. Dadurch wird das Flächenheizelement im Bereich seiner befestigten Längskante nicht geknickt und dadurch nicht beschädigt.

Es ist weiterhin als bevorzugte Maßnahme anzusehen, die beiden Längskanten des Rohrköpers entlang des Schlitzes radial nach innen einzurollen oder umzustülpen. Eine solche Anordnung ist gerade dann einzusetzen, wenn an jeder dieser beiden Kanten jeweils ein Flächenheizelement befestigt wird, die sich, ausgehend von dem Schlitz, gegenläufig den Einsatz umgeben.

Entlang des Schlitzes können die Kanten, die den Schlitz begrenzen, oder auch die beiden eingerollten oder umgestülpten Längskanten, so miteinander verbunden werden, dass, im Querschnitt gesehen, eine V- oder U-förmige Nut gebildet ist. Die Flächenteile des Einsatzes, die die Nut bilden, können derart dimensioniert und unter Spannung gesetzt werden, dass der Rohrköper des Einsatzes durch die V- oder U-förmige Nut einen Federbereich bildet, der eine radial nach außen gerichtete Vorspannung des Rohrköpers erzeugt und dadurch das Flächenheizelement gegen die Innenfläche der Außenhülle drückt. Die Federspannung des V- oder U-förmigen Abschnitts ist so gewählt, dass sich die Öffnungsweite des V- oder U-förmigen Querschnitts des Abschnitts vergrößert und sich dadurch auch der Durchmesser des Rohrkörpers erweitert, wenn der Einsatz nicht in die Außenhülle eingesetzt ist.

Für eine Befestigung des mindestens einen Heizelements an dem Einsatz, oder auch um mehrere Einsätze in Achsrichtung des rohrförmigen Gehäuses gesehen hintereinander anzuordnen und miteinander zu verbinden, kann eine Schiene, die dem Einsatz zugeordnet ist, verwendet werden. Diese Schiene besitzt im Querschnitt ein Profil, mit dem sich ein entsprechendes, korrespondierendes Profil des Einsatzes, vorzugsweise ein Profil, das sich an der einen Kante des Einsatzes entlang des Schlitzes befindet, verbinden lässt.

Es ist auch vorgesehen, dass in einer Ausführungsform, die in einigen Anwendungsfällen zu bevorzugen ist, der Einsatz, in Querschnittsrichtung der Außenhülle gesehen, in mindestens zwei, vorzugsweise in mindestens drei, Teilkörper unterteilt ist, die durch unter Vorspannung stehende federnde Elemente gegeneinander in Richtung des mindestens einen Flächenheizelements und somit in radialer Richtung auseinander gedrückt werden. Hierbei können zum Beispiel Schraubenfedern eingesetzt werden, die in korrespondierenden Sacklochbohrungen in zwei aneinandergrenzenden Flächen der Teilkörper eingefügt sind und dadurch die Teilkörper in radialer Richtung und damit in Richtung des Flächenheizelements auseinanderdrücken.

Als Flächenheizelement wird vorzugsweise ein PTC-Folienheizelement eingesetzt, das sehr dünn ausgeführt werden kann und sich in der Größe einfach an die zu beheizende Innenfläche der Außenhülle anpassen lässt.

Wie bereits vorstehend angegeben ist, können mehrere Einsätze, die jeweils mindestens ein Flächenheizelement aufweisen, in Richtung der Längsachse an einem gemeinsamen Verbindungsteil hintereinander gestapelt gehalten werden. Hierfür kann das gemeinsame Verbindungsteil eine Verbindungsschiene sein, die eine in Längsrichtung verlaufende Nut/Feder-Führung aufweist, an der der jeweilige Einsatz mit einer korrespondierenden Nut/Feder-Führung verbindbar ist. Über die Schiene können dann mehrere Einsätze in Längsrichtung gestapelt verbunden werden. Diese gestapelten Einsätze werden dann vorzugsweise in einer gemeinsamen Außenhülle aufgenommen.

Für eine solche Stapelung mehrerer Einsätze hintereinander können an den jeweiligen aneinandergrenzenden Enden ineinandergreifende als Verdrehsicherung dienende Teile, beispielsweise Nuten und Vorsprünge, angeordnet werden.

Um einen Einsatz, an dem vorzugsweise bereits das Flächenheizelement befestigt ist, in die Außenhülle einzusetzen, wird eine Montagehilfe eingesetzt, die beispielsweise zwei Stäbe besitzt, die beispielsweise im Bereich des Schlitzes des Einsatzes in die Kanten des Rohrkörpers eingreifen, um die Kanten zusammenzudrücken und so den Durchmesser des Rohrkörpers zu verringern; gleichzeitig wird dadurch der Rohrkörper vorgespannt.

Weitere Einzelheiten und Merkmale der Erfindung ergeben sich aus der nachfolgenden Beschreibung von Ausführungsbeispielen anhand der Zeichnung. In der Zeichnung zeigen
- Figur 1: eine perspektivische Darstellung der erfindungsgemäßen Heizeinrichtung gemäß einer Ausführungsform,
- Figur 2: eine perspektivische Ansicht eines Einsatzes, wie er in der Ausführungsform der Figur 1 eingesetzt ist, mit stabförmigen Hilfswerkzeugen, um diesen Einsatz in die Außenhülle der Heizeinrichtung der Figur 1 einzusetzen,
- Figur 3: den Einsatz der Figur 2 mit einem daran gehaltenen Flächenheizelement,
- Figur 4: eine der Figur 3 entsprechende Ansicht, bei der das Flächenheizelement auf die Außenfläche des Einsatzes abgewickelt ist,
- Figur 5: das Flächenheizelement, wie es in den Figuren 1, 3 und 4 verwendet ist,
- Figur 6: den Einsatz, wie er in den Figuren 3 und 4 gezeigt ist, aus einer Sicht von der Gegenseite des Schlitzes aus,
- Figur 7A: eine Schiene, wie sie in den Ausführungsformen der Figuren 1 bis 4 verwendet ist, mit oberem und unterem Klemmteil,
- Figur 7B: den Abschnitt einer Schiene, die die Ausführung eines mittleren Klemmteils zeigt,
- Figur 7C: die Schiene der Figur 7B mit einem daran befestigten Flächenheizelement,
- Figur 8: einen Einsatz gemäß einer weiteren Ausführungsform mit einer V-förmigen Nut,
- Figur 9: eine Draufsicht auf den Einsatz der Figur 8 aus axialer Richtung des Rohrkörpers gesehen, an dem ein Flächenheizelement befestigt ist und auf der Außenseite des Einsatzes abgewickelt ist,
- Figuren 10 und 11: jeweils eine schematische Querschnittsdarstellung der zwei Ausführungsformen des Einsatzes, wie er in den Figuren 1 bis 4 und 6 einerseits und in den Figuren 8 und 9 andererseits dargestellt ist,
- Figuren 12 bis 15: verschiedene Ausführungsformen der Heizeinrichtung im Querschnitt mit Außenhülle, Heizelement und Einsatz, und
- Figur 16: eine Heizeinrichtung, bei der mehrere Einsätze an einem gemeinsamen Klemmteil gehalten sind, die in einer gemeinsamen, rohrförmigen Außenhülle eingesetzt sind.

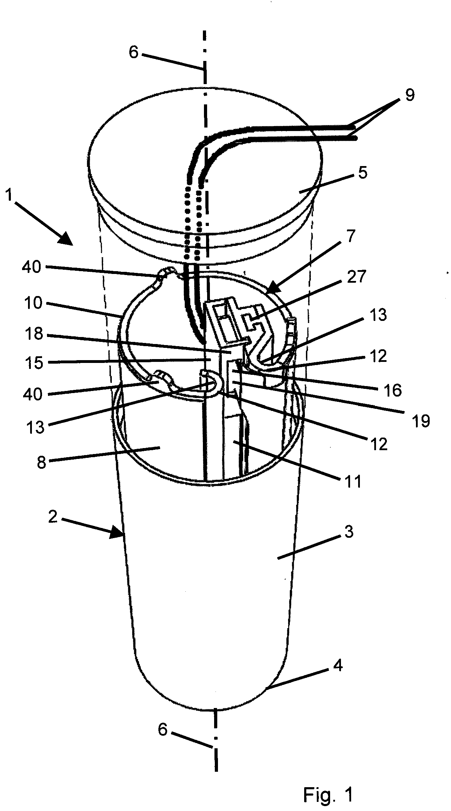

Eine Heizeinrichtung gemäß der Erfindung, wie sie in Figur 1 dargestellt und allgemein mit dem Bezugszeichen 1 bezeichnet ist, findet ihren Einsatz zum Beheizen von Flüssigkeiten in einem Reservoir eines Fahrzeugs, wie beispielsweise einem Tank oder einem Behälter.

Die gezeigte Heizeinrichtung 1 umfasst ein gegenüber der zu beheizenden Flüssigkeit beständiges Gehäuse 2 mit einer rohrförmigen Außenhülle 3. Diese Außenhülle 3 ist an dem einen Ende durch ein Bodenteil 4 und an dem anderen Ende durch ein Deckelteil 5 verschlossen und besitzt vorzugsweise einen runden oder ovalen Querschnitt, dem eine in Längsrichtung verlaufende Rohrachse 6 zugeordnet werden kann.

In die Außenhülle 3 des Gehäuses 2 ist ein Einsatz 7 eingesetzt. Zwischen der Außenhülle 3 und dem Einsatz 7 befindet sich ein Flächenheizelement 8, das durch den Einsatz 7 flächig gegen die Innenseite der Außenhülle 3 angedrückt wird. Dieses Flächenheizelement 8 wird über Anschlussleiter 9, die abgedichtet durch das Deckelteil 5 aus dem Gehäuse 2 herausgeführt sind, mit Strom, der beispielsweise durch das Bordnetz ein Fahrzeuges bereitgestellt wird, versorgt.

Das mindestens eine Flächenheizelement 8 deckt zumindest einen Teilumfang der Innenfläche der Außenhülle 3, in Umfangsrichtung der Außenhülle 3 gesehen, ab und steht, an der Innenfläche der Außenhülle 3 anliegend, damit in Wärmekontakt. Hierzu übt der Einsatz 7 auf das Flächenheizelement 8 eine Druckkraft aus, die durch einen äußeren Hüll- oder Rohrkörper 10 der dargestellten Ausführungsform erzeugt wird.

Der Hüllkörper 10 des Einsatzes 7 besitzt einen Schlitz 11, der in Richtung der Rohrachse 6 der Außenhülle 3 verläuft. Dieser Hüllkörper 10 steht unter einer nach außen gerichteten Vorspannung, wenn er in die Außenhülle 3 eingesetzt ist. Das bedeutet, dass der Einsatz 7 in einem Zustand, in dem er noch nicht in den Hüllkörper 10 eingesetzt ist, einen Durchmesser hat, der größer ist als der Innendurchmesser oder die Innenabmessungen der Außenhülle 3.

Um diesen Einsatz 7 in die Außenhülle 3 einzusetzen, muss demzufolge der Einsatz 7 bzw. der Hüllkörper 10 des Einsatzes 7 im Bereich des Schlitzes 11 zusammengedrückt werden. Der Hüllkörper bzw. der geschlitzte Rohrkörper 10 kann demzufolge in Bezug auf seine Querschnittsform als ein Abschnitt einer Spiralfeder angesehen werden, die jedoch in Richtung der Rohrachse 6 der Außenhülle 3 gesehen, mit einer großen Ausdehnung bzw. der Länge dimensioniert ist.

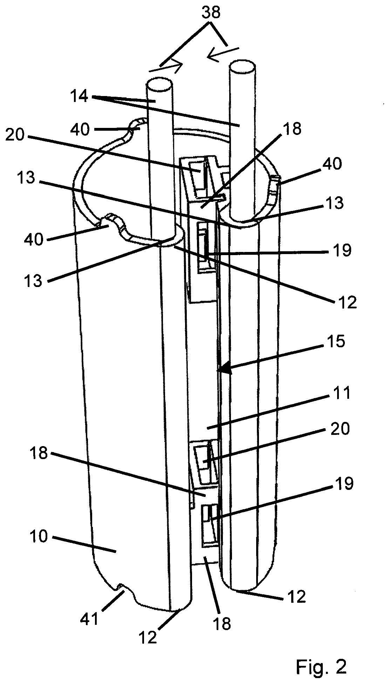

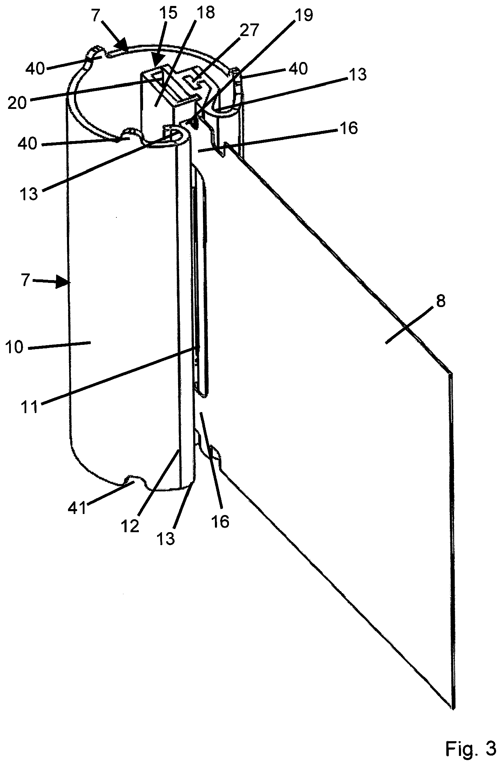

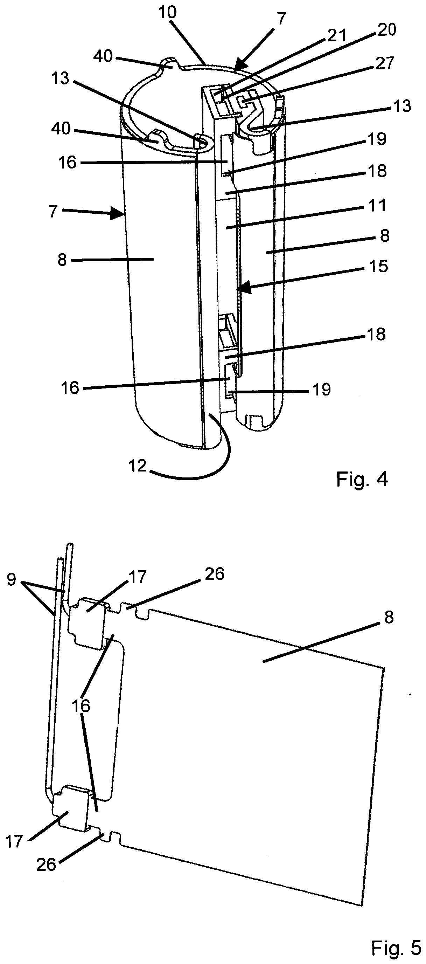

Der Einsatz 7 der Heizeinrichtung 1 der Figur 1, der in Figur 2 ohne Flächenheizelement 8 und in den Figuren 3 und 4 mit Flächenheizelement 8 gezeigt ist, ist im Bereich des Schlitzes 11 an jeder Kante 12 mit einem nach innen umgebördelten, eingerollten oder umgestülpten Rand bzw. Längskante 13 versehen. Dieser nach innen, im Querschnitt gesehen beispielsweise halbkreisförmig eingerollte Rand, kann dazu verwendet werden, zwei stabförmige Hilfswerkzeuge 14, wie dies in Figur 2 gezeigt ist, einzusetzen, um mit diesen Hilfswerkzeugen den Hüllkörper 10 des Einsatzes 7 im Bereich des Schlitzes 11 zusammenzudrücken, so dass sich der Außendurchmesser des Einsatzes 7 verkleinert.

Im Bereich des Schlitzes 11 ist das Flächenheizelement 8 vorzugsweise an einem leistenförmigen Verbindungsteil 15, das entlang der einen Kante 12 des Einsatzes 7 befestigt ist, gehalten, wie dies anhand der Figuren 1, 3 und 4 dargestellt ist.

Wie anhand der Figuren zu erkennen ist, dient der entsprechende, umgebördelte Rand 13 des Hüllkörpers 10 des Einsatzes 7 dazu, das Flächenheizelement 8 mit einem definierten Radius um die den Schlitz 11 begrenzende Kante 12 herum auf die Außenfläche des Einsatzes 7 herumzuführen.

Das Flächenheizelement 8, das detaillierter in Figur 5 dargestellt ist, das vorzugweise ein PTC-Flächenheizelement ist, besitzt nur eine sehr geringe Dicke. An einer Seitenkante des rechteckigen Flächenheizelements 8 befinden sich zwei laschenförmige Verlängerungen, auch als Anschlusslaschen 16 bezeichnet. Im Bereich dieser Anschlusslaschen 16 sind die beiden Anschlussleiter 9 des Flächenheizelements 8 befestigt, wobei die Anschlussstellen im Bereich der Anschlusslaschen 16 zusätzlich mit einer Vergussmasse 17 u. a. für eine Zugentlastung abgedeckt sind.

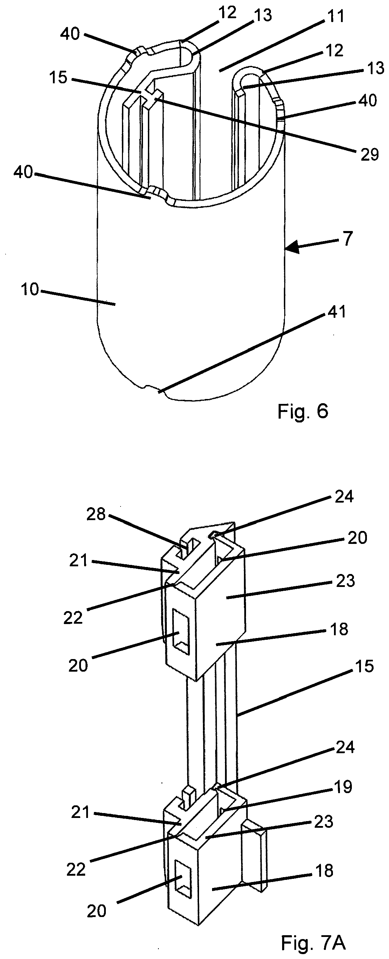

Für die Befestigung des Flächenheizelements 8 an der einen Kante 12 entlang des Schlitzes 11, wozu vorzugsweise das leistenförmige Verbindungsteil 15 verwendet wird, wird die jeweilige Lasche 16 des Flächenheizelements 8 jeweils an einem Klemmteil 18, das Teil des leistenförmigen Verbindungsteils 15 ist, verbunden. Eine solche Leiste 15 mit zwei Klemmteilen 18 ist detaillierter in Figur 7A dargestellt. Hierfür wird die jeweilige Lasche 16 in eine korrespondierende Öffnung 19 des Klemmteils 18 eingeschoben, wie dies in der Figur 3 dargestellt ist. Hierbei werden die Anschlussleiter 9 über das eine Klemmteil 18 aus dem Bereich des leistenförmigen Verbindungsteils 15 über eine weitere Öffnung 20, die der Öffnung 19 gegenüber liegt, herausgeführt, wie dies anhand der Figur 1 zu erkennen ist.

Das Klemmteil 18 ist aus einem Basisteil 21 und einem daran über ein Gelenk 22 schwenkbar verbundenen, deckelförmigen Klappteil 23 aufgebaut, so dass, um die Anschlusslasche 16 des Flächenheizelements 8 mit dem Klemmteil 18 und damit an der Leiste 15 zu verbinden, das deckelförmige Klappteil 23 über das Gelenk 22 geöffnet werden kann, um dann die Lasche 16 des Flächenheizelements 8 über die Öffnung 19, beispielsweise in Form einer Aussparung, in das Klemmteil 18 einzulegen. Danach kann der freie Schenkel des Klappteils 23 über Rastteile 24 mit dem korrespondierenden Rasteil 25 des Basisteils 21 verbunden werden.

An dem Flächenheizelement 8 sind im Bereich der Laschen 16 seitlich vorstehende Flächenteile 26 vorhanden, die für eine zusätzliche Verankerung der jeweiligen Lasche 16 in dem jeweiligen Klemmteil 18 dienen.

Das leistenförmige Verbindungsteil 15 ist mit dem einen Rand über eine in Längsrichtung des Einsatzes 7 verlaufende Nut/Feder-Führung 27 verbunden, indem das Verbindungsteil 15, das in der gezeigten Ausführungsform die Nut 28 aufweist, in Längsrichtung auf die Feder 29, die dann der Kante 12 bzw. dem eingerollten Rand 13 zugeordnet ist, aufgeschoben wird. Die Positionierung der Nut 28 einerseits und der korrespondierenden Feder 29 andererseits kann auch ausgetauscht werden, so dass die Leiste 15 die Feder 29 aufweist und der Kante 12 bzw. dem eingerollten Rand 13 die Nut 28 zugeordnet ist. Bevorzugt ist der Teil der Nut/Feder-Führung 27, der dem Einsatz 7, beziehungsweise dem Hüllkörper 10 des Einsatzes 7, zugeordnet ist, in einem Teil mit dem Hüllkörper 10 ausgeführt; dieser Teil könnte aber auch mit geeigneten Befestigungsmitteln an der Kante 12 entlang des Schlitzes 11 befestigt werden.

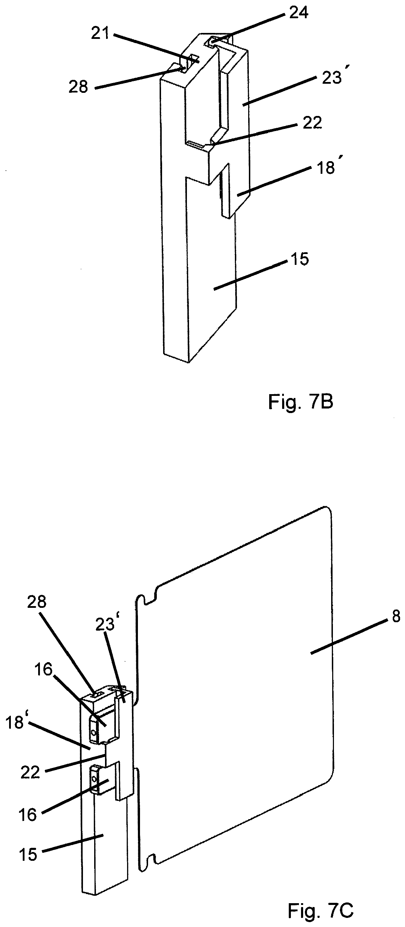

In den Figuren 7B und 7C ist eine weitere Ausführungsform eines Klemmteils 18' der Leiste 15, an der das Flächenheizelement 8 befestigt werden kann, gezeigt. Für dieses Klemmteil 18' sind die zwei laschenförmigen Verbindungsteile 16, d.h. die Anschlusslaschen, wie sie auch in der zuvor beschriebenen Ausführungsform verwendet werden, mit einem geringen Abstand zueinander an der entsprechenden Längskante des Flächenheizelements 8 positioniert. Auch das Klemmteil 18' besitzt ein schwenkbar über ein Gelenk 22 befestigtes Klappteil 23' mit einer, in Draufsicht auf die Leiste 15 gesehen, T-förmigen Kontur. Während sich das Gelenk 22 am Ende des einen Schenkels befindet, decken die beiden anderen Schenkel jeweils eine der beiden Anschlusslaschen 16 ab.

Das Klemmteil 18' kann auch zusätzlich zu den Klemmteilen 18, die in den vorherigen Figuren dargestellt und beschrieben sind, vorzugweise zwischen den Klemmteilen 18, angeordnet werden, entweder als zusätzlicher Befestigungspunkt für das Flächenheizelement 8 oder auch um die Anschlussleiter 9 an dem Einsatz 7 zu fixieren. Abhängig davon, welche Art von Klemmteilen 18, 18' verwendet wird und an welcher Stelle sie positioniert werden, werden die Klemmteile 18, 18' und die entsprechenden Laschen 16 und Befestigungspunkte des Flächenheizelements 8 aufeinander angepasst.

Es ist verständlich, dass die Anschlussleiter 9 nicht, wie in den verschiedenen Ausführungsformen dargestellt, über die Anschlusslaschen 16 in das Innere des Einsatzes 7 geführt werden müssen, sondern sie können auch an anderer Stelle angeordnet werden, obwohl die dargestellten Ausführungsformen bevorzugt sind.

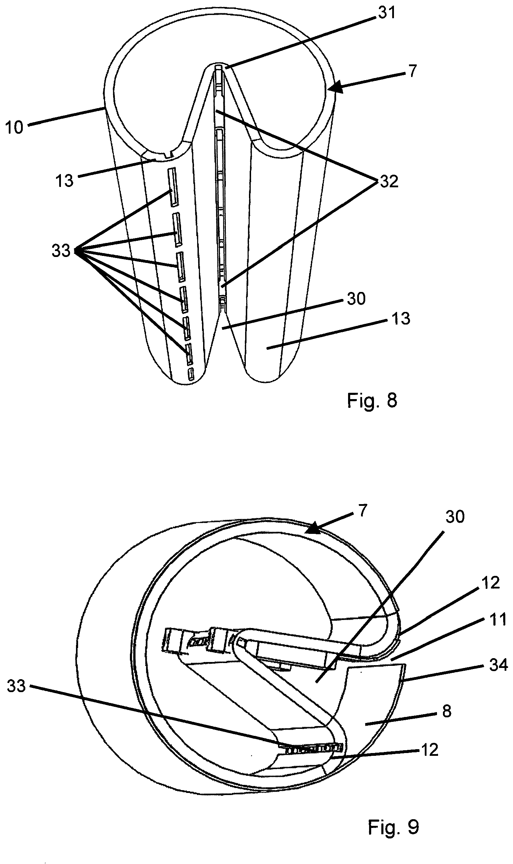

In den Figuren 8 und 9 ist eine weitere Ausführungsform eines Einsatzes 7 gezeigt, die, verglichen mit der zuvor beschriebenen Ausführungsform des Einsatzes 7, eine V-förmige Nut 30 zeigt, im Bereich derer der Hüllkörper 10 des Einsatzes 7, in Umfangsrichtung gesehen, verlängert ist und so der Hüllkörper 10 geschlossen ist. Auch dieser Hüllkörper 10 ist so vorgespannt, dass sein Außenumfang, oder auch Durchmesser, größer ist als der Innenumfang, oder Durchmesser, der Außenhülle 3 der Heizeinrichtung 1, in der er eingesetzt wird, um das Flächenheizelement 8 flächig an die Innenseite der Außenhülle 3 anzudrücken. Das im Querschnitt gesehene V-förmige Flächenteil des Hüllkörpers 10 unterstützt die Vorspannkraft, die erhalten wird, wenn der Hüllkörper 10 zusammengedrückt wird, um seinen Durchmesser zu verringern.

In dem Bodenbereich 31 der im Querschnitt V-förmigen Nut 30 sind Durchbrüche 32 vorhanden, durch die die Anschlusslaschen 16 zur Befestigung des Flächenheizelements 8 geführt sind. Auch können durch diese Durchbrüche 32 die Anschlussleiter 9 geführt werden. Weitere Durchbrüche 33 können auch im Übergangsbereich des Hüllkörpers 10 in den V-förmigen Nutabschnitt 30 positioniert werden, um die Steifigkeit des Einsatzes 7 zu reduzieren und die beim Spannen des Hüllkörpers 10 auftretende Verformung so zu konzentrieren, dass der Öffnungswinkel der V-förmigen Nut 30 definiert verringert wird.

Die Figur 9 zeigt den Einsatz 7 der Figur 8 mit daran angeordnetem Flächenheizelement 8, aus axialer Richtung des Rohrkörpers gesehen, an dem ein Flächenheizelement 8 befestigt ist. Entsprechend der zuvor beschriebenen Ausführungsform wickelt sich das Flächenheizelement 8 über die eine Kante 12, die den Schlitz 11 bzw. die V-förmige Nut 30 begrenzt, auf die Außenseite des Hüllkörpers 10 ab. Das freie Ende 34 des Flächenheizelements 8 kann dann über die andere Kante 12, die die andere Seite der V-förmigen Nut 30 begrenzt, in die V-förmige Nut 30 hineingeführt und gegebenenfalls dort befestigt werden.

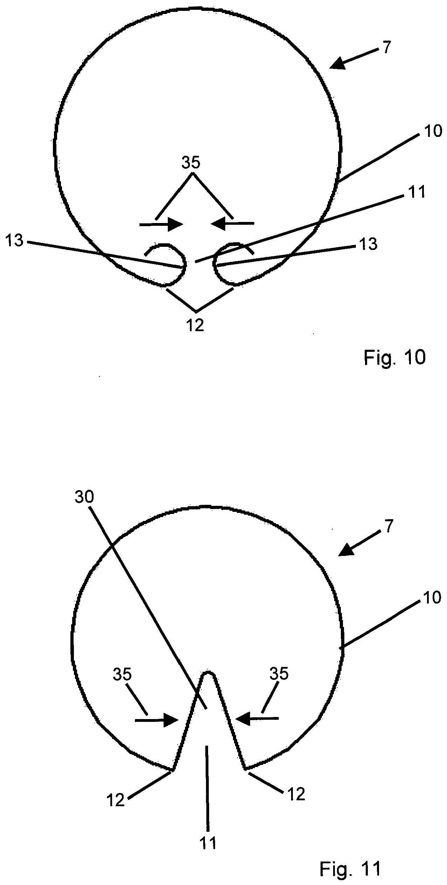

Der prinzipielle Unterschied der Ausführungsformen der Figuren 8 und 9 gegenüber der zuvor beschriebenen Ausführungsform ist anhand der schematischen Querschnittsdarstellungen der Figuren 10 und 11 ersichtlich. Beide Einsätze 7 beruhen darauf, dass sie im entspannten Zustand einen Außendurchmesser aufweisen, der größer ist als der Innendurchmesser der Außenhülle 3 des Gehäuses 2 der Heizeinrichtung 1. Wenn sie in die Außenhülle 3 eingesetzt werden, werden sie so zusammengedrückt, angedeutet durch die Pfeile 35, dass sich der Außendurchmesser des Hüllkörpers 10 verringert, so dass dann der vorgespannte Hüllkörper 10 nach dem Einsetzen in die Außenhülle 3 und Freigabe aufgrund der Vorspannung expandiert und dadurch das Flächenheizelement 8 an die Innenfläche der Außenhülle 3 andrückt. In der Ausführungsform des Einsatzes 7, die die V-förmige Nut 30 einsetzt, wird die Vorspannkraft durch die V-förmigen Flächenteile, und dadurch, dass der Hüllkörper 10 im Bereich des Schlitzes 11 geschlossen ist, verstärkt.

Die Vorspannung des Einsatzes 7 bzw. dessen Hüllkörpers 10 kann durch die Wahl des Materials und die Dimensionierung, insbesondere die Materialstärke, eingestellt werden. Vorzugsweise wird für den Einsatz 7 ein Kunststoffmaterial verwendet, das gute elastische Eigenschaften ebenso wie eine gute Temperaturstabilität besitzt. Besonders gut geeignet ist glasfasergefüllter PA66.

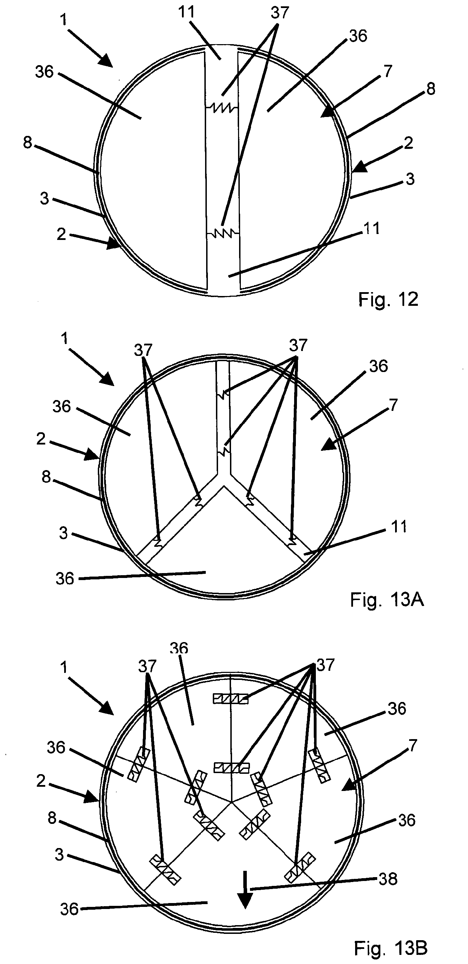

Die Figuren 12 bis 15 zeigen verschiedene weitere Ausführungsformen der Heizeinrichtung 1 im Querschnitt.

Die Ausführungsform, wie sie in Figur 12 dargestellt ist, besitzt einen Einsatz 7, der im Querschnitt gesehen aus zwei halbrunden Teilkörper 36 besteht, deren abgerundeten Flächen der Krümmung der Innenfläche der Außenhülle 3 angepasst sind, so dass sie flächig das Flächenheizelement 8 an die Innenseite der Außenhülle 3 andrücken. Zwischen den beiden Teilkörpern 36 befinden sich Federelemente 37, beispielsweise Schraubenfedern, die auf die beiden Teilkörper 36 eine radial nach außen gerichtete Kraft aufbringen, so dass die jeweiligen Teilkörper 36 auseinander gedrückt werden und einen Druck auf das Flächenheizelement 8 ausüben. In Figur 12 ist auch angedeutet, dass in einer solchen Ausführungsform zwei Flächenheizelemente 8 eingesetzt werden, die im Bereich des Spalts oder Schlitzes 11 zwischen den beiden Teilkörpern 36, in dem auch die Federelemente 37 angeordnet sind, befestigt sind. Außerdem können im Bereich des Schlitzes 11 zwischen den beiden Teilkörpern 36 die Anschlussleiter 9 geführt werden, obwohl dies nicht detailliert dargestellt ist.

Die Ausführungsform der Heizeinrichtung 1, wie sie in Figur 13A im Querschnitt dargestellt ist, ebenso wie die Heizeinrichtung 1, die in Figur 13B gezeigt ist, basiert auf dem Prinzip, das zuvor anhand der Figur 12 beschrieben ist.

In der Figur 13A ist der Einsatz 7, im Querschnitt gesehen, in drei Teilkörper 36 unterteilt. Zwischen den jeweils benachbarten Teilkörpern 36 ist ebenso wie in Figur 12 in den jeweiligen Schlitzen 11 mindestens ein Federelement 37 eingesetzt. Diese Federelemente 37 drücken folglich die Teilkörper 36 in Richtung der Innenseite der Außenhülle 3 auseinander.

In der Ausführungsform der Figur 13B ist der Einsatz 7, im Querschnitt gesehen, in fünf Teilkörper bzw. Winkelsegmente 36 unterteilt, so dass jeder Teilkörper ein Winkelsegment von etwa 70° einnimmt, obwohl die Winkelsegmente 36 auch in anderer Weise aufgeteilt werden können. Zwischen benachbarten Winkelsegmenten 36 sind Federelemente 37, beispielsweise in korrespondierenden Sacklöchern, eingesetzt, die auf den jeweiligen Teilkörper 36 eine radial nach außen gerichtete Kraft, wie beispielsweise durch den Pfeil 38 angedeutet ist, ausüben.

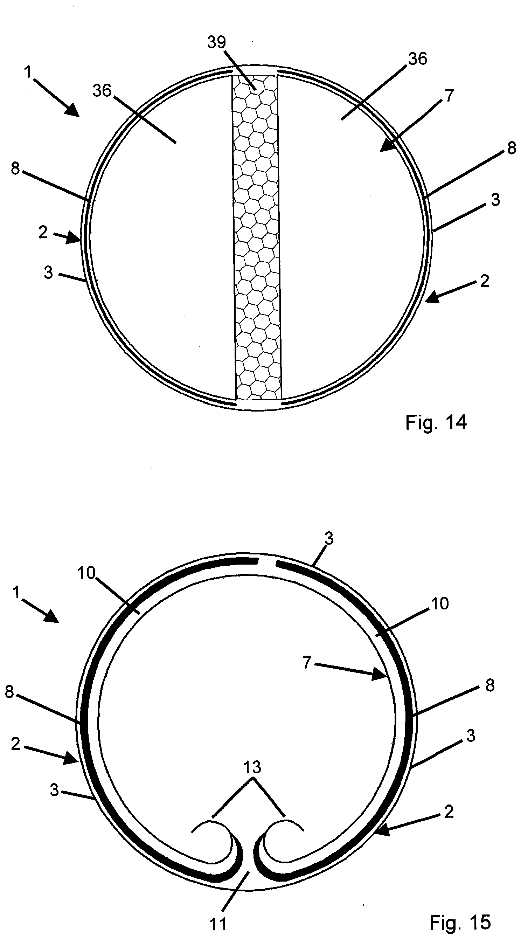

Figur 14 zeigt eine Ausführungsform der Heizeinrichtung 1 im Querschnitt, bei der, vergleichbar mit der Ausführungsform der Figur 12, zwei Teilkörper 36 eingesetzt werden. Als Federelement ist allerdings anstelle beispielsweise einer Schraubenfeder 37, wie sie in der Ausführungsform der Figur 12 zum Einsatz kommen kann, ein Schaumkörper 39 eingefügt, der, wenn der Einsatz 7 in die Außenhülle 3 eingesetzt wird, komprimiert wird und so die beiden Teilkörper 36 auseinander drückt, um das Flächenheizelement 8 an die Innenseite der Außenhülle 3 anzudrücken. Derartige Schaumkörper 39 können auch in den Ausführungsformen eingesetzt werden, die in den Figuren 13A und 13B dargestellt sind.

Die Ausführungsform der Heizeinrichtung 1, wie sie im Querschnitt in Figur 15 schematisch dargestellt ist, ist mit derjenigen vergleichbar, die zuvor anhand der Figuren 1 bis 9 beschrieben ist. Allerdings sind in dieser Ausführungsform zwei Flächenheizelemente 8 vorhanden, die jeweils in dem Schlitz 11 des Einsatzes 7 befestigt sind und die, ausgehend von dem Schlitz 11, den Einsatz 7 gegenläufig umgeben.

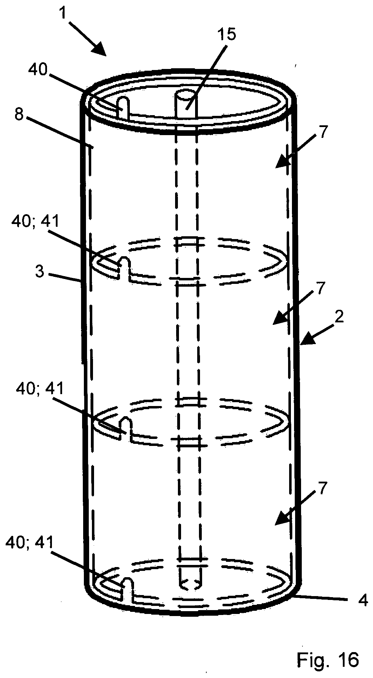

In der Ausführungsform der Figur 16 sind mehrere Einsätze 7 in einer gemeinsamen Außenhülle 3, in Achsrichtung übereinander gestapelt, aufgenommen. Falls erforderlich können diese Einsätze 7 über eine gemeinsame Schiene 15, beispielsweise eine solche, die zuvor anhand der Figuren 1 bis 7 beschrieben ist, verbunden werden. Hierzu können die einzelnen Einsätze 7 über eine Nut/Feder-Verbindung an der gemeinsamen Schiene 15 gehalten werden.

Die in Längsrichtung 6 gestapelten Einsätze 7 können an den jeweiligen aneinandergrenzenden Enden ineinandergreifende als Verdrehsicherung dienende Teile, beispielsweise Vorsprünge oder Laschen 40, aufweisen, die sich in entsprechend angepasste Ausnehmungen 41 des sich anschließenden Einsatzes 7 einsetzen. Diese Laschen 40 und Ausnehmungen 41 sind auch in den zuvor anhand der Figuren 2 bis 4 und 6 beschriebenen Ausführungsformen des Einsatzes 7 angedeutet.

Die erfindungsgemäße Heizeinrichtung zeichnet sich durch ihren einfachen Aufbau und die kompakte Bauform aus. Es sind nur wenige Komponenten erforderlich, nämlich das Gehäuse 2 mit Außenhülle 3, Bodenteil 4 und Deckelteil 5, das Flächenheizelement 8 und der Einsatz 7. Das Flächenheizelement 8 als Heizung ist ein selbsttragendes Bauteil. Ein PTC-Flächenheizelement ist mittels Bestromung und somit bei Erwärmung selbstregelnd, und es wird der Tankinhalt vor Überhitzung geschützt. Das Federelement oder die Federelemente, die eingesetzt werden, um das Flächenheizelement 8 gegen die Innenfläche der Außenhülle 3 zu drücken, sind mechanische Bauteile und praktisch unempfindlich gegen Beschädigung. Gleiches gilt für ein Schaumelement 39, mit dem Teile des Einsatzes 7 gegen das Flächenheizelement 8 gedrückt werden, indem das Schaumelement 39 durch sein Expansionsverhalten einen Kraftschluss mit den Teilen, an denen es anliegt, herstellt.

Es ist auch vorgesehen, ein Element anstelle des Schaumstoffelements einzusetzen, das sich durch Phasenumwandlung/Vernetzung ausdehnt und aushärtet und so einen Kraftschluss zwischen den Teilen des Einsatzes 7 herstellt.

Die Heizeinrichtung 1 wird abhängig davon, in welchem Behälter sie zum Beheizen einer Flüssigkeit eingesetzt wird, dimensioniert. Bevorzugt ist eine zylindrische Form des Außengehäuses mit bevorzugten Durchmesser der Außenhülle 3 von 30 mm bis 150 mm, wobei ein besonders bevorzugter Durchmesser bei 40 mm liegt, der ausreichend ist, um im Innenraum ausreichend Platz für den Einsatz 7 und die erforderlichen Federelemente, zu denen auch das Hüllkörper 10 des Einsatzes 7 zählt, bereitzustellen. Die Länge der Heizeinrichtung 1 in Richtung der Rohrachse 6 der Außenhülle 3 gesehen, liegt bei 30 mm bis 300 mm. Die Außenhülle 3 sollte aus einem korrosionsbeständigen Material bestehen, bevorzugt Edelstahl oder ein Kunststoff, mit einer Materialstärke von 0,5 mm bis 3 mm, vorzugsweise im Bereich vom 0,5 mm bis 1 mm.

Die Außenhülle 3 könnte auch eine Kegelform, mit entsprechend angepasstem Einsatz 7, haben. Eine solche Form ist dann bevorzugt, wenn die Außenhülle 3 durch Spritzguss hergestellt wird.

Durch die anhand der Figur 2 beschriebene Spannvorrichtung (Hilfswerkzeug 14) ist es möglich, den als Feder- und Andrückvorrichtung dienenden Einsatz 7 ohne Kontakt zum Gehäuse 2, und damit ohne Gefahr einer Beschädigung, in die Außenhülle 3 einzuführen. Auch wird so eine automatisierte Montage möglich. Die eingerollten Ränder 13 des Hüllkörpers 10 des Einsatzes 7 sind eine einfache Maßnahme, um dort mit dem Hilfswerkzeug 14 einzugreifen. Außerdem stellen die eingerollten Ränder 13 sicher, dass ein im Innenbereich des Einsatzes 7 befestigtes Flächenheizelements 8 ohne eine Knickbeanspruchung auf die Außenfläche des Einsatzes 7 geführt werden kann.

Für stabförmige Hilfswerkzeuge, wie sie in Figur 2 gezeigt sind, könnte auch eine Verdickung des Hüllkörpers 10 vorgesehen werden, im Bereich derer eine Bohrung oder mehrere Bohrungen oder Löcher eingebracht sind, in die ein Spannwerkzeug, beispielsweise mit zwei Dornen, eingreift.

Im Bereich des Schlitzes 11 oder der V-förmigen Nut 30 des Einsatzes 7 kann das Flächenheizelement 8 auch verklebt werden.

Der Einsatz 7 bzw. dessen Hüllkörper 10 kann so ausgelegt werden, dass sich der Schlitz 11 oder die V-förmige Nut 30, wenn der Einsatz 7 in die Außenhülle 3 eingesetzt ist, schließt, so dass die Kanten 12 des Hüllkörpers 10, die den Schlitz 11 begrenzen, annähernd aneinander stoßen bzw. die Flächen der V-förmigen Nut 30 annähernd aufeinander liegen.

Im Fall der V-förmigen Nut 30 ist die sich durch die Nut 30 ergebende Tasche zunächst geöffnet, so dass das Flächenheizelement 8 eingelegt und befestigt werden kann. Das Flächenheizelement 8 wird mit seinen Zuleitungen durch zwei Öffnungen in den Boden der V-förmigen Nut 30, die im Querschnitt auch U-förmig ausgebildet sein kann, und damit in den Boden der Tasche, in dem entsprechende Öffnungen vorhanden sind, eingefädelt. Die Anschlusslaschen 16 des Flächenheizelements 8, und damit auch der Anschlussbereich, ragen vorzugsweise durch die Öffnungen am Boden der Tasche hindurch. Dadurch, dass das Flächenheizelement 8 in Wickelrichtung (radiale Richtung) und senkrecht zur Wickelrichtung (axiale Richtung) in definierter Position gehalten wird, wird ein Verkippen unterbunden.

Für eine Einführung des Einsatzes 7 mit dem daran befestigten Flächenheizelement 8 reicht eine einachsige Rollbewegung, um das Flächenheizelement 8 auf die Außenfläche des Einsatzes 7 aufzulegen, aus, so dass Einsatz 7 mit Flächenheizelement 8 in die Außenhülle 3 des Gehäuses 2 eingesetzt werden kann.

Für die Materialauswahl, insbesondere des Einsatzes 7, ist zu beachten, dass über die gesamte Lebensdauer der Heizeinrichtung 1 und unter der zu erwartenden Temperaturbelastung von bis zu 100 °C eine ausreichende Federkraft vorhanden ist, um das Flächenheizelement 8 gegen die Innenfläche der Außenhülle 3 zu drücken. Die radial nach außen gerichtete durch den Einsatz 7 ausgeübte Federkraft sollte bei 1 N liegen.

Als Material für den Einsatz 7 sind hochtemperaturbeständige Polymere, wie PEEK, PA46 Stanyl TW341, PVDF, PI, zu bevorzugen, aber auch Standardpolymere, wie PA66 GF, PA12, PC, PET, PP. Auch können zusätzliche Metalleinleger als Armierungsteile den Einsatz 7 verstärken.

Als Federelemente können auch Streifen aus Federstahl mit einer Breite von 5 mm bis 15 mm, vorzugsweise etwa 10 mm, und mit einer Dicke von 0,1 mm bis 0,5 mm, besonders bevorzugt von 0,1 mm, eingesetzt werden, die beispielsweise auch als Teile in die Wandung des Hüllkörpers 10 des Einsatzes 7 eingelegt werden können. Hierbei ist für den Hüllkörper 10 des Einsatzes 7 besonders PA66 GF wegen guter Temperaturbeständigkeit bis 250 °C geeignet, gegebenenfalls mit zusätzlichem Stahl- oder Federstahleinlegerteilen.

Falls Federelemente aus einem Schaummaterial verwendet werden, wird dafür vorzugsweise ein FKM-Schaum (Viton®) verwendet, der eine Temperaturbeständigkeit bis zu 250 °C besitzt. Auch kann ein Silikonschaum verwendet werden, der eine Temperaturbeständigkeit bis zu 280 °C zeigt.

In weiteren Ausführungsform kann der in mehrere Sektionen unterteile Einsatz 7, wie er in den Figuren 12 bis 14 dargestellt ist, mit dem darin gehaltenen Flächenheizelement 8 zunächst in die Außenhülle 3 eingesetzt werden, um dann in die Zwischenräume, in denen sich in den Figuren 12 bis 14 das Schaumelement oder die Federelemente befinden ein Werkstoff in flüssiger Phase einzusprühen, der chemisch oder unter Wärme reagiert, sich ausdehnt und das Flächenheizelement 8 an die Innenfläche der Außenhülle 3 andrückt. Der Schaum bindet ab und härtet aus und friert so seine Form unter Beibehaltung des Anpressdrucks des Einsatzes 7 auf das Flächenheizelement 8 ein. Bevorzugt sind hierfür Polyurethan-Spritzschaum oder UF-Spritzschaum.

Es ist ersichtlich, dass Merkmale, die anhand nur einer Ausführungsform beschrieben sind, entsprechend auch bei den anderen beschriebenen Ausführungsformen einsetzbar sind, ohne dass dies ausdrücklich erwähnt ist.

## Patentansprüche

1. Heizeinrichtung (1) zum Beheizen von Flüssigkeiten in einem Reservoir, wie einem Tank oder einem Behälter, eines Fahrzeugs, die ein gegenüber der zu beheizenden Flüssigkeit beständiges Gehäuse (2) mit einer rohrförmigen Außenhülle (3), die an dem einen Ende durch ein Bodenteil (4) und an dem anderen Ende durch ein Deckelteil (5) verschlossen ist, einen in die Außenhülle (3) des Gehäuses (2) eingefügten Einsatz (7) und mindestens ein zwischen der Außenhülle (3) und dem Einsatz (7) angeordnetes Flächenheizelement (8) aufweist, wobei Anschlussleiter (9) des Heizelements (1) abgedichtet aus dem Gehäuse (2) herausgeführt sind, **dadurch gekennzeichnet, dass** das mindestens eine Flächenheizelement (8) die Innenfläche der Außenhülle (3), in Umfangsrichtung der Außenhülle (3) gesehen, zumindest über einen Teilumfang, mit dieser in Wärmekontakt stehend, abdeckt und der Einsatz (7), oder zumindest Teile davon, unter Vorspannung stehend, das mindestens eine Flächenheizelement (8) an die Innenfläche der Außenhülle (3) zumindest in Teilbereichen andrückt.

2. Heizeinrichtung nach Anspruch 1, **dadurch gekennzeichnet, dass** das Flächenheizelement (8) entlang eines Schlitzes (11), der in Achsrichtung, bezogen auf die Rohrachse der rohrförmigen Außenhülle (3), verläuft, gehalten ist und sich das Flächenheizelement (8), ausgehend von dem Schlitz (11), auf einer Außenfläche des Einsatzes (7) abwickelt.

3. Heizeinrichtung nach Anspruch 1 oder 2, **dadurch gekennzeichnet, dass** das Flächenheizelement (8) an dem Einsatz (7) entlang des Schlitzes (11) durch mindestens ein Klemmteil (18, 18') befestigt ist.

4. Heizeinrichtung nach einem der Ansprüche 1 bis 3, **dadurch gekennzeichnet, dass** die Anschlussleiter (9) des Flächenheizelements (8) im Bereich des Schlitzes (11) in einen inneren Bereich des Einsatzes (7) geführt sind.

5. Heizeinrichtung nach Anspruch 4 in Verbindung mit Anspruch 3, **dadurch gekennzeichnet, dass** das mindestens eine Klemmteil (18, 18') eine Öffnung (19) als Durchführung für die Anschlussleiter (9) in den inneren Bereich des Einsatzes (7) aufweist.

6. Heizeinrichtung nach einem der Ansprüche 1 bis 5, **dadurch gekennzeichnet, dass** das Flächenheizelement (8) mindestens eine laschenförmige Verlängerung (16) aufweist, mittels der das Flächenheizelement (8) an dem Einsatz (7) im Bereich des Schlitzes (11) gehalten ist.

7. Heizeinrichtung nach einem der Ansprüche 1 bis 6, **dadurch gekennzeichnet, dass** das mindestens eine Flächenheizelement (8) in Umfangsrichtung gesehen eine solche Länge aufweist, dass keine überlappenden Flächen des Flächenheizelements (8) entstehen.

8. Heizeinrichtung nach einem der Ansprüche 1 bis 7, **dadurch gekennzeichnet, dass** der Einsatz (7) einen geschlitzten Rohrkörper (10) aufweist, der in radialer Richtung seinen Durchmesser erweiternd vorgespannt ist.

9. Heizeinrichtung nach Anspruch 8, **dadurch gekennzeichnet, dass** mindestens die eine Längskante (12) des Rohrköpers (10) entlang des Schlitzes (11) radial nach innen eingerollt oder umgestülpt ist.

10. Heizeinrichtung nach Anspruch 9, **dadurch gekennzeichnet, dass** die beiden Längskanten (12) des Rohrköpers (10) entlang des Schlitzes (11) radial nach innen eingerollt oder umgestülpt sind.

11. Heizeinrichtung nach Anspruch 10, **dadurch gekennzeichnet, dass** die Kanten (12) der beiden eingerollten oder umgestülpten Ränder (13) miteinander verbunden sind, so dass im Querschnitt gesehen eine V- oder U-förmige Nut (30) gebildet ist.

12. Heizeinrichtung nach einem der Ansprüche 1 bis 11, **dadurch gekennzeichnet, dass** das mindestens eine Flächenheizelement (8) über eine Leiste (15) entlang des Schlitzes (11) des Einsatzes (7) befestigt ist.

13. Heizeinrichtung nach Anspruch 1, **dadurch gekennzeichnet, dass** der Einsatz (7), in Querschnittsrichtung der Außenhülle (3) gesehen, in mindestens zwei, vorzugsweise in mindestens drei, Teilkörper (36) unterteilt ist, die durch federnde Elemente (37) gegeneinander in radialer Richtung und somit in Richtung des mindestens einen Flächenheizelements (8) auseinander gedrückt werden.

14. Heizeinrichtung nach einem der Ansprüche 1 bis 13, **dadurch gekennzeichnet, dass** mehrere Einsätze (7), die jeweils mindestens ein Flächenheizelement (8) aufweisen, in Richtung der Längsachse (6) der rohrförmigen Außenhülle (3) an einem gemeinsamen Verbindungsteil (15) hintereinander gestapelt gehalten sind.

15. Heizeinrichtung nach Anspruch 14, **dadurch gekennzeichnet, dass** die in Längsrichtung (6) gestapelten Einsätze (7) an den jeweiligen aneinandergrenzenden Enden ineinandergreifende als Verdrehsicherung dienende Teile (40, 41) aufweisen.

## Claims

1. Heating device (1) for heating liquids in a reservoir, such as a tank or a container, of a vehicle, having a housing (2) which is resistant to the liquid to be heated and has a tubular outer casing (3), which is closed at one end by a base part (4) and at the other end by a cover part (5), an insert (7) inserted into the outer casing (3) of the housing (2) and at least one surface heating element (8) arranged between the outer casing (3) and the insert (7), wherein connecting conductors (9) of the heating element (1) are routed out of the housing (2) sealed, **characterized in that** the at least one surface heating element (8) covers the inner surface of the outer casing (3), viewed in the circumferential direction of the outer casing (3), at least over a partial circumference, with which the outer casing (3) is in thermal contact, and the insert (7), or at least parts thereof, is pretensioned and presses the at least one surface heating element (8) against the inner surface of the outer casing (3) at least in partial regions.

2. Heating device according to claim 1, **characterized in that** the surface heating element (8) is held along a slot (11) which extends in the axial direction relative to the tubular axis of the tubular outer casing (3), and the surface heating element (8) unwinds on an outer surface of the insert (7) starting from the slot (11).

3. Heating device according to claim 1 or 2, **characterized in that** the surface heating element (8) is attached to the insert (7) along the slot (11) by at least one clamping part (18, 18').

4. Heating device according to one of claims 1 to 3, **characterized in that** the connecting conductors (9) of the surface heating element (8) are routed in the region of the slot (11) into an inner region of the insert (7).

5. Heating device according to claim 4 in combination with claim 3, **characterized in that** the at least one clamping part (18, 18') has an opening (19) serving as a feedthrough for the connecting conductors (9) into the inner region of the insert (7).

6. Heating device according to one of claims 1 to 5, **characterized in that** the surface heating element (8) has at least one tab-shaped extension (16) by means of which the surface heating element (8) is held on the insert (7) in the region of the slot (11).

7. Heating device according to one of claims 1 to 6, **characterized in that** the at least one surface heating element (8), viewed in the circumferential direction, has a length such that no overlapping areas of the surface heating element (8) arise.

8. Heating device according to one of claims 1 to 7, **characterized in that** the insert (7) has a slotted tubular body (10) which is pretensioned to widen its diameter in the radial direction.

9. Heating device according to claim 8, **characterized in that** at least one longitudinal edge (12) of the tubular body (10) is rolled or inverted radially inwards along the slot (11).

10. Heating device according to claim 9, **characterized in that** the two longitudinal edges (12) of the tubular body (10) are rolled or inverted radially inwards along the slot (11).

11. Heating device according to claim 10, **characterized in that** the edges (12) of the two rolled-up or inverted edges (13) are connected to one another so that a V-shaped or U-shaped groove (30) is formed when viewed in cross-section.

12. Heating device according to one of claims 1 to 11, **characterized in that** the at least one surface heating element (8) is attached via a strip (15) along the slot (11) of the insert (7).

13. Heating device according to claim 1, **characterized in that** the insert (7), viewed in the cross-sectional direction of the outer casing (3), is subdivided into at least two, preferably at least three, partial bodies (36) which are pressed apart from one another by spring elements (37) in the radial direction and thus in the direction of the at least one surface heating element (8).

14. Heating device according to one of claims 1 to 13, **characterized in that** a plurality of inserts (7), each having at least one surface heating element (8), are held stacked one behind the other on a common connecting part (15) in the direction of the longitudinal axis (6) of the tubular outer casing (3).

15. Heating device according to claim 14, **characterized in that** the inserts (7) stacked in the longitudinal direction (6) have, at the respective adjacent ends, parts (40, 41) that intermesh and serve as anti-rotation means.

## Revendications

1. Dispositif chauffant (1) destiné à chauffer des liquides dans un réservoir, tels une cuve ou un bac, d'une automobile, lequel dispositif présente un logement (2) permanent à l'égard du liquide à chauffer et avec une enveloppe extérieure (3) tubulaire qui est fermée à une extrémité par une partie de fond (4) et à l'autre extrémité par une partie de couvercle (5), un insert (7) inséré dans l'enveloppe extérieure (3) du logement (2), et au moins un élément chauffant de surface (8) agencé entre l'enveloppe extérieure (3) et l'insert (7), dans lequel des conducteurs de raccordement (9) de l'élément chauffant (1) sont guidés de manière étanche hors du logement (2), **caractérisé en ce que** le au moins un élément chauffant de surface (8) recouvre, vu dans la direction circonférentielle de l'enveloppe extérieure (3), la surface intérieure de l'enveloppe extérieure (3) au moins par-dessus une circonférence partielle en contact thermique avec celle-ci, et l'insert (7), ou au moins des parties de celui-ci, soumis à une précontrainte, pousse le au moins un élément chauffant de surface (8) contre la surface intérieure de l'enveloppe extérieure (3) au moins dans des régions partielles.

2. Dispositif chauffant selon la revendication 1, **caractérisé en ce que** l'élément chauffant de surface (8) est maintenu le long d'une fente (11) qui se déroule dans la direction axiale par rapport à l'axe de tube de l'enveloppe extérieure (3) tubulaire, et l'élément chauffant de surface (8) se déploie depuis la fente (11) sur une surface extérieure de l'insert (7).

3. Dispositif chauffant selon la revendication 1 ou 2, **caractérisé en ce que** l'élément chauffant de surface (8) est fixé contre l'insert (7) le long de la fente (11) par au moins une pièce de serrage (18, 18').

4. Dispositif chauffant selon l'une des revendications 1 à 3, **caractérisé en ce que** les conducteurs de raccordement (9) de l'élément chauffant de surface (8) sont guidés dans la région de la fente (11) jusque dans une région intérieure de l'insert (7).

5. Dispositif chauffant selon la revendication 4 en liaison avec la revendication 3, **caractérisé en ce que** la au moins une pièce de serrage (18, 18') présente une ouverture (19) faisant office de passage pour les conducteurs de raccordement (9) jusque dans la région intérieure de l'insert (7).

6. Dispositif chauffant selon l'une des revendications 1 à 5, **caractérisé en ce que** l'élément chauffant de surface (8) présente au moins une extension (16) en forme de patte au moyen de laquelle l'élément chauffant de surface (8) est maintenu contre l'insert (7) dans la région de la fente (11).

7. Dispositif chauffant selon l'une des revendications 1 à 6, **caractérisé en ce que** le au moins un élément chauffant de surface (8), vu dans la direction circonférentielle, présente une longueur telle que qu'aucune surface chevauchante de l'élément chauffant de surface (8) n'apparaisse.

8. Dispositif chauffant selon l'une des revendications 1 à 7, **caractérisé en ce que** l'insert (7) présente un corps tubulaire (10) fendu qui est précontraint dans la direction radiale de manière à élargir son diamètre.

9. Dispositif chauffant selon la revendication 8, **caractérisé en ce que** le au moins un bord longitudinal (12) du corps tubulaire (10) est enroulé ou retourné radialement vers l'intérieur le long de la fente (11).

10. Dispositif chauffant selon la revendication 9, **caractérisé en ce que** les deux bords longitudinaux (12) du corps tubulaire (10) sont enroulés ou retournés radialement vers l'intérieur le long de la fente (11).

11. Dispositif chauffant selon la revendication 10, **caractérisé en ce que** les bords (12) des deux bordures (13) enroulées ou retournées sont raccordés l'un à l'autre de sorte que vu en coupe transversale soit formée une rainure (30) en forme de V ou de U.

12. Dispositif chauffant selon l'une des revendications 1 à 11, **caractérisé en ce que** le au moins un élément chauffant de surface (8) est fixé par une barrette (15) le long de la fente (11) de l'insert (7).

13. Dispositif chauffant selon la revendication 1, **caractérisé en ce que** l'insert (7), vu dans la direction de coupe transversale de l'enveloppe extérieure (3), est subdivisé en au moins deux, de préférence en au moins trois, corps partiels (36) qui sont poussés, par des éléments de ressort (37), les uns contre les autres dans la direction radiale et ainsi s'éloignant les uns des autres dans la direction du au moins un élément chauffant de surface (8).

14. Dispositif chauffant selon l'une des revendications 1 à 13, **caractérisé en ce que** plusieurs inserts (7), qui présentent respectivement au moins un élément chauffant de surface (8), sont maintenus empilés les uns derrière les autres contre une pièce de raccordement (15) commune dans la direction de l'axe longitudinal (6) de l'enveloppe extérieure (3) tubulaire.

15. Dispositif chauffant selon la revendication 14, **caractérisé en ce que** les inserts (7) empilés dans la direction longitudinal (6) présentent, aux extrémités respectives adjacentes les unes aux autres, des pièces (40, 41) s'engageant les unes dans les autres et servant de sécurité de rotation.
